Europäisches Patentamt

European Patent Office

Office européen des brevets

(11) Numéro de publication: **0 383 679**
**A1**

## (12) DEMANDE DE BREVET EUROPEEN

(21) Numéro de dépôt: **90400395.1**

(22) Date de dépôt: **13.02.90**

(51) Int. Cl.5: **A47J 17/08, A23N 7/04, B27L 1/00**

(30) Priorité: **13.02.89 FR 8901836**

(43) Date de publication de la demande:
**22.08.90 Bulletin 90/34**

(84) Etats contractants désignés:
**AT BE CH DE DK ES FR GB GR IT LI LU NL SE**

(71) Demandeur: **Fischer, Gérard**
**Moulin Rateau, St-Martin-Sur-Oreuse**
**F-89260 Thorigny sur Oreuse(FR)**

(72) Inventeur: **Fischer, Gérard**
**Moulin Rateau, St-Martin-Sur-Oreuse**
**F-89260 Thorigny sur Oreuse(FR)**

(74) Mandataire: **Kügele, Bernhard et al**
**NOVAPAT FRANCE 63 bis, boulevard Bessières**
**F-75017 Paris(FR)**

(54) **Epluchoir pour légumes de forme sensiblement cylindrique.**

(57) La présente invention concerne un épluchoir pour légumes constitué par une couronne fixe (1) comportant un disque mobile (2) coaxial muni d'un orifice d'introduction (19) central. Le disque mobile (2) comporte un moyen abrasif (3) constitué par une bande abrasive (10) défilant entre deux galets (6, 7). Deux galets-presseurs (12, 13) exercent une pression centripète sur les surfaces de la bande abrasive en contact avec le légume (18).

Application : épluchage d'asperges et de tous légumes de forme sensiblement cylindrique.

FIG.1

EP 0 383 679 A1

La présente invention concerne un épluchoir pour légumes de forme sensiblement cylindrique tels que des asperges.

L'épluchage de tels légumes, en particulier les asperges qui sont fragiles se fait habituellement de façon manuelle. Lorsque les quantités de légumes à éplucher sont importantes comme c'est le cas dans l'industrie agroalimentaire, cette opération nécessite le recours à une main-d'oeuvre importante.

La présente invention a pour objet un épluchoir automatique simple et robuste permettant aussi bien un usage ménager qu'un usage intensif dans l'industrie agroalimentaire. La présente invention concerne plus particulièrement un épluchoir pour légumes de forme sensiblement cylindrique constitué par une couronne fixe supportant un disque mobile coaxial, muni d'un orifice central d'introduction du légume à éplucher, ledit disque mobile étant entraîné en rotation par rapport à la couronne fixe et supportant au moins un moyen abrasif dont les surfaces abrasives sont perpendiculaires à un plan radial, ledit moyen abrasif étant mobile radialement et étant repoussé en position centrale par un ressort.

Lors de l'introduction d'un légume dans l'orifice d'introduction, les surfaces extérieures dudit légume viennent en contact avec les surfaces abrasives qui sont repoussées au contact du légume par ledit ressort, et la rotation du disque provoque l'épluchage des légumes par abrasion. Le légume est poussé manuellement ou par un système automatique dans l'orifice d'introduction jusqu'à l'extrémité inférieure puis est retiré. Le terme de couronne fixe s'étend à tout bâti comportant un orifice central coaxial avec l'orifice central d'introduction du disque mobile. Les dimensions de l'orifice d'introduction sont définies par la section du plus gros légume à éplucher.

Selon un mode de réalisation préféré, le moyen abrasif est constitué par une bande abrasive formant une boucle entre deux pivots disposés perpendiculairement à la surface du disque mobile, en deux points diamétralement opposés. De préférence, l'un au moins des pivots est constitué au moins par un galet tournant. Un galet-presseur exerce avantageusement une force centripète selon un axe radial sensiblement perpendiculaire à la surface de la bande abrasive.

De préférence, le dispositif comporte deux galets-presseurs symétriques exerçant une force centripète sur la boucle abrasive de part et d'autre de l'orifice d'introduction.

Le dispositif comporte avantageusement un moteur d'entraînement du disque mobile ainsi qu'un mécanisme de transmission entraînant la rotation du galet tournant. Il se produit de ce fait un double mouvement : d'une part le défilement de la bande abrasive par rapport aux surfaces du légume en contact, d'autre part une rotation des surfaces abrasées.

De préférence, le défilement de la bande abrasive et la rotation de la couronne mobile sont asynchrones. On évite ainsi une mobilisation relative des surfaces en contact.

Selon un mode de réalisation particulier, le disque mobile comporte une couronne dentée coopérant avec une roue dentée entraînée par un moteur électrique.

Selon un mode de réalisation préféré, le dispositif comporte en outre des moyens de détection de la présence d'un légume dans l'orifice d'introduction, ces moyens de détection déclenchant la rotation du disque et le cas échéant le défilement de la bande abrasive.

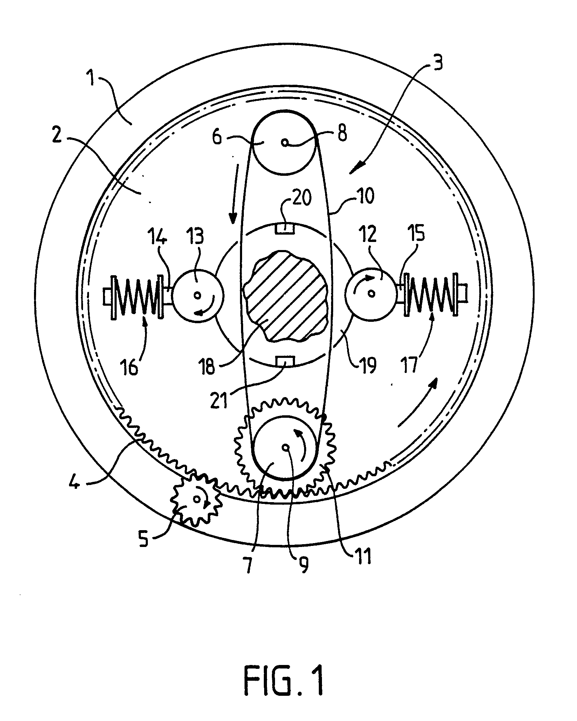

La présente invention sera mieux comprise dans la description qui va suivre s'appuyant sur la figure 1 représentant une vue de face du dispositif.

Le dispositif comporte une couronne fixe 1, un disque mobile 2 et des moyens abrasifs 3. Le disque mobile 2 comporte une couronne extérieure 4 dentée coopérant avec une roue dentée 5 entraînée par un moteur électrique. Ce moteur électrique entraîne la rotation relative du disque mobile 2 par rapport à la couronne fixe 1. Le disque mobile 2 comporte deux galets 6, 7 tournant autour de deux axes 8, 9 perpendiculaires au plan du disque mobile 2. Une bande abrasive 10 forme une boucle entre les deux galets 6, 7. L'un au moins des galets mobiles 7 est entraîné en rotation, de préférence avec un mécanisme coopérant avec le mécanisme d'entraînement du disque mobile 2. Le mécanisme d'entraînement 11 du défilement de la bande abrasive est constitué d'un système de roue dentée réducteur de vitesse. Bien entendu, tout autre mécanisme connu dans l'art peut être substitué à celui décrit dans l'exemple sans sortir du cadre de la présente invention. Le disque mobile 2 supporte également deux galets-presseurs 12, 13 montés chacun sur une pièce de guidage 14, 15 permettant un déplacement radial décalé 12, 13. Des ressorts 16, 17 repoussent les galets-presseurs respectivement 13, 12 contre la bande abrasive 10 qui elle-même vient en contact avec le légume 18 passant à travers l'orifice central 19. Des moyens de détection 20, 21 constitués par exemple par une ampoule 20 et une cellule photoélectrique 21 commandent la mise en marche du moteur électrique lorsqu' un légume est introduit dans l'orifice d'introduction 19.

Le fonctionnement est le suivant. L'utilisateur tient le légume en mains, lorsqu'il s'agit d'une asperge par la tête. Il introduit la queue dans l'orifice d'introduction et le repousse jusqu'à ce que sa main vienne en contact avec la surface inférieure du dispositif. Il retire ensuite le légume. Pendant le déplacement axial du légume dans le dispositif, la combinaison du défilement de la bande abrasive et de la rotation du disque mobile assure un épluchage régulier et efficace des surfaces du légume venant en contact avec la bande abrasive .

La présente invention n'est pas limitée aux exemples de réalisation qui viennent d'être décrits, elle est au contraire susceptible de modifications et de variantes qui apparaîtront à l'homme de l'art.

**Revendications**

1 - Epluchoir pour légumes de forme sensiblement cylindrique, caractérisé en ce qu'il est constitué par une couronne fixe (1) supportant un disque mobile (2) coaxial muni d'un orifice d'introduction (19) central, ledit disque mobile (2) étant entraîné en rotation par rapport à la couronne fixe (1) et supportant au moins un moyen abrasif (3) dont les surfaces abrasives sont perpendiculaires à un plan radial, ledit moyen abrasif (3) étant mobile radialement et étant repoussé en position centrale par un ressort.

2 - Epluchoir pour légumes selon la revendication 1, caractérisé en ce que le moyen abrasif (3) est constitué par une bande abrasive (10) formant un boucle entre deux pivots disposés perpendiculairement à la surface du disque mobile en deux points diamétralement opposés.

3 - Epluchoir pour légumes selon la revendication 2, caractérisé en ce que l'un au moins des pivots est constitué par un galet tournant (7) et en ce que au moins un galet-presseur (13) exerce une force centripète selon un axe radial sensiblement perpendiculaire à la surface de la bande abrasive.

4 - Epluchoir pour légumes selon la revendication 3, caractérisé en ce qu'il comporte un moteur d'entraînement du disque mobile (2).

5 - Epluchoir pour légumes selon la revendication 4, caractérisé en ce qu'il comporte en outre un mécanisme de transmission entraînant la rotation du galet tournant.

6 - Epluchoir pour légumes selon la revendication 5, caractérisé en ce que le défilement de la bande abrasive (10) et la rotation du disque mobile (2) sont asynchrones.

7 - Epluchoir pour légumes selon l'une quelconque des revendications 4 à 6, caractérisé en ce que le disque mobile (2) comporte une couronne dentée (4) coopérant avec une roue dentée (5) entraînée par un moteur électrique.

8 - Epluchoir pour légumes selon l'une quelconque des revendications 1 à 7, caractérisé en ce qu'il comporte des moyens de détection (20, 21) de la présence d'un légume dans l'orifice d'introduction, lesdits moyens de détection (20, 21) commandant la mise en rotation du disque mobile (2).

FIG.1

Europäisches
Patentamt

**EUROPÄISCHER RECHERCHENBERICHT**

Nummer der Anmeldung

EP 90 40 0395

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A- 609 285 (NAVARRE)<br>* Document entier *<br>--- | 1 | A 47 J 17/08<br>A 23 N 7/04<br>B 27 L 1/00 |
| A | DE-C- 411 991 (SCHWEISS)<br>* Document entier *<br>--- | 1 | |
| A | US-A-4 549 479 (HARTER et al.)<br>* Document entier *<br>--- | 1,2 | |
| A | FR-A-2 387 608 (SAINT LOPEZ)<br>----- | | |

|  |  |
|---|---|
| | **RECHERCHIERTE SACHGEBIETE (Int. Cl.5)**<br><br>A 47 J<br>A 23 N<br>B 27 L |

Der vorliegende Recherchenbericht wurde für alle Patentansprüche erstellt

| Recherchenort | Abschlußdatum der Recherche | Prüfer |
|---|---|---|
| DEN HAAG | 16-03-1990 | BODART P.A. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.....................................................................
& : Mitglied der gleichen Patentfamilie, übereinstimmendes
    Dokument